# EUROPEAN PATENT SPECIFICATION

(11) **EP 3 568 450 B1**
(45) Date of publication and mention of the grant of the patent: **10.03.2021**
(21) Application number: 18705014.1
(22) Date of filing: 11.01.2018
(51) Int. Cl.: C09K 8/14

(54) **A MIXTURE FOR OBTAINING A DRILLING FLUID FOR DRILLING PLANTS FOR WELLS AND EXCAVATIONS FOR CIVIL AND INDUSTRIAL ENGINEERING WORKS AND DRILLING FLUIDS SO OBTAINED**
MISCHUNG ZUR GEWINNUNG EINER BOHRFLÜSSIGKEIT FÜR BOHRANLAGEN FÜR BOHRUNGEN UND BAGGER FÜR ZIVIL- UND INDUSTRIETECHNISCHE ARBEITEN UND SO ERHALTENE BOHRFLÜSSIGKEITEN
MÉLANGE POUR OBTENIR UN FLUIDE DE FORAGE POUR DES INSTALLATIONS DE FORAGE POUR DES PUITS ET DES EXCAVATIONS POUR DES TRAVAUX PUBLICS ET INDUSTRIELS ET FLUIDES DE FORAGE AINSI OBTENUS

(30) Priority: 13.01.2017 IT 201700003218
(43) Date of publication of application: 20.11.2019
(73) Proprietor: Laviosa Chimica Mineraria SpA, 57123 Livorno (IT)
(72) Inventor: UMBERTO, Laviosa, 57123 Livorno (IT); CLAUDIO, Traversi, 57123 Livorno (IT)
(74) Representative: De Milato, Francesco
(86) International application number: PCT/IB2018/050167
(87) International publication number: WO 2018/130957

(56) References cited:
- WO-A1-2005/040301
- CA-A- 972 346
- CA-A1- 2 802 048
- US-A- 4 332 693
- US-A- 4 600 744
- US-A- 5 723 416

## Description

### Field of the invention

The present invention relates to the field of drilling operations and ground excavations for civil or industrial uses like foundations, pilings, structural diaphragms, etc.

In particular, the present invention relates to a composition of a drilling fluid to be used to stabilize the walls of the hole during the above disclosed works.

### Description of the prior art

As it is known, the drilling fluids are an essential element of the equipment that is needed to produce the boreholes for water, hydrocarbons, or geothermal steam, as well as the excavations for foundations, pilings, or structural diaphragms.

Many drilling techniques are known, among which the main ones are "guided drilling", "dry percussion drilling", "direct circulation rotary drilling", "reverse circulation rotary drilling", "percussion drilling". Among these drilling techniques, from time to time, is chosen the one according to the morphology of the ground where the borehole have to be drilled, of the type of operation to be carried out (foundation, water well drilling, horizontal drilling, etc.) and of the depth to be reached.

The most common drilling techniques are the pilings drilling and the rotary drilling with direct or indirect circulation for water wells.

In the piling drilling, the drilling tool comprises essentially a plurality of drill rods, which provide, at one end, a tool that is selected on the basis of the drilling system. Several mobile drilling rigs are provided for drilling works that are equipped with a drilling tool, which is selected on the basis of nature, and consistency of the soil where the borehole has to be drilled. Number, power and operative capability of the equipments in piling drilling are such to allow completing the job within the time schedule that is foreseen on the basis of environmental, lithological, and hydrogeological conditions of the ground where the hole has to be drilled, as well as on the basis of the dimensions of the piles (length and diameter). A problem that generally has to be solved when drill rods have to drill incoherent soils, is how to support the wall of the hole, in order to avoid collapsing of the wall same, notwithstanding the arc effect that is produced on its circumference. The main system provided for solving the above mentioned problem, is to use, during drilling, an alkaline bentonite mud. This method is commonly used when the soil, where the hole is to be drilled, is an incoherent soil, for which, thanks to the thixotropic properties of bentonite mud an effective support of the hole walls is provided by forming a colloidal layer for filtration and thixotropy (property to flow when shaken or submitted to vibrations), the colloidal layer pushed by the mud column pressure, provides to the soil the sufficient lateral pressure, which prevents it to collapse. In direct circulation rotary drilling technique, e.g. for water wells, the borehole is advanced by rotation of a drilling tool, generally a drill bit, or a core barrel, mounted on the end of the hollow rods. The rotary motion of the rods and, therefore, of the tool, is produced by a drive head connected to the drill rods. During rotation of the drill bit, the solid material ground is broken into fragments, also called *"cuttings",* which are carried to the surface by the drilling fluid.

Generally, the drilling fluid is sucked by a pump and, passing through the drive head, is pumped under pressure down the drill hollow rods and, then, exits the ports of the drill bit.

The fluid, then, flows up the annular space between the hole walls and the drill hollow rods, carrying cuttings in suspension to the surface where they are collected in a settling tank, where the cuttings sink to the bottom. Then the mud passes in a second tank, which feeds the pump, repeating the cycle.

In case it would be necessary to take samples of the ground, i.e. core samples, and not simply fragments, a core barrel is used as drilling tool.

Both for piling operations, and for water wells drillings, and, in general, for excavation operations, the drilling fluid performs many functions, among which the main ones are cooling and lubricating the tool, in order to prevent breaking due to the high friction produced during drilling, and to carry to the surface the fragments produced during drilling.

Furthermore, the drilling fluid performs also the function of forming a hydraulic head, which is able to prevent uncontrolled leakage and to support the borehole walls.

In addition to the above, the drilling fluid performs also the important function of depositing a panel on the borehole walls, that is also called filter cake. This is the solid fraction, the finest and colloidal one, of the fluid and has a permeability so low that often is referred to it as *"protective barrier*"*.* Instead, the liquid fraction of the fluid that passes the panel and infiltrates into the formation, is called "filtrate". As can be easily understood, if the amount of liquid, which passes into the formation, that is the loss of filtrate, is high, the drilling fluid composition changes and this can cause a loss in rheological properties of the fluid. Both the control of the filtrate and the production of a thin panel are essential in order to maintain the hole, or borehole, open.

In granular, or incoherent, soils, that means mainly constituted of sand, cobbles, and gravel, the formation of the filter cake is very important. This, in fact, covers and seals the hole, preventing the hole wall collapse, and contributes to the stability of the drilling fluid properties.

However, a high-quality panel cannot be obtained without a low filtrate (water loss). The amount of filtrate in sand, however, is random and depends on the panel quality.

In case of clayey grounds, instead, the quality and the quantity of filtrate are more important for preventing hydration, in other words the absorption of water by the clay of the mud, and the consequent swelling. Therefore, in this case, the formation of a waterproof panel has a secondary importance. However, generally it is not possible to obtain an optimal value of the filtrate without a high quality of the panel.

For the above reasons it is advisable to have a drilling mud that is able to guarantee a low loss of filtrate, besides having determined characteristics of viscosity, plasticity, and thixotropy in order to remove and transport the drilling waste. The drilling fluids are generally classified depending on their liquid-phase, in oil-based fluids, if they contain a solid particles suspended in an oil phase or, in water-based fluids, if they contain solid particles suspended in a water phase.

The water-based drilling fluids can be further classified in sodic bentonite-based fluids (generally known as muds), and fluids containing specific polymers, in some cases even additivated with specific thickening agent. However, the above mentioned typologies of drilling fluids have many drawbacks.

Notwithstanding the water-based drilling fluids which contain sodic bentonite (bentonite muds) have the advantage to be dissolved in aqueous solution, allowing forming a panel, which coats the borehole walls, and that are, therefore, high performing in granular and incoherent grounds, however, they have the drawback that, in order to form a panel of high quality, it is necessary to use a large quantity of sodic bentonite, about 30-60 kg of bentonite for 1 m³ of mud. Another aspect to consider is that, in case of using bentonite muds, equipments must be provided, in the drilling yard, for removing bentonite mud from the ground, for example sand collectors or centrifugal machines, and, more in general all those mechanical solutions that are able to remove the bentonite mud from the drilled ground. Therefore, the drilling fluids containing bentonite are less practical to be used because they involve a greater complexity of the drilling plant, and a larger volume of the materials to be handled (storages and dosages) and to be disposed after treatment.

Furthermore it is to be noted that the bentonite muds lose effectiveness in case they are prepared by using acid water (pH<6).

Instead regarding the drilling fluids containing polymers, generally, carboxymethyl cellulose (CMC), or the partially hydrolyzed polyacrylamide (PHPA), notwithstanding they show to be high performing starting from a low concentration (1-5 kg for m³ of fluid), and therefore they are economically advantageous with respect to bentonite fluids, they have the drawback that they are not able to form the above mentioned panel, or filter cake, and, therefore, they can only be used in certain grounds, that means in cohesive soils, in particular clayey grounds, for which the formation of the above mentioned panel is not essential, whilst they cannot be used in case of drilling of incoherent grounds, since they would be rapidly dispersed in the environment surrounding the hole, and, very likely, would cause the hole to collapse, because it would be no more possible to support the walls of the hole same. Other solutions which provides to mix sodic bentonites with the above mentioned polymers are not satisfactory, because the proposed compositions exclusively acts as a polymeric extender for bentonite muds, only reducing the mud consumption.

Examples of drilling fluids having the above disclosed drawbacks are described in US4600744, US4332693 and CA972346.

### Summary of the invention

It is, therefore, an object of the present invention to provide a water-based drilling fluid that is able to overcome the above limits of the drilling fluids of prior art.

It is, in particular, an object of the present invention to provide a water-based drilling fluid which is able to form a panel, or *"filter cake",* highly efficient, i.e. able to greatly reduce the loss of filtrate at the lateral walls of the borehole.

It is also an object of the present invention to provide a water-based drilling fluid that is high performing independently from the type of water that is used for its production, and therefore a mixture that can be dissolved in any type of water that can be found in the area surrounding the yard.

It is furthermore an object of the present invention to provide a drilling fluid that is economically advantageous with respect to the bentonite-based drilling muds that are used at present in the drilling of incoherent soils.

These and other objects are achieved by a water-based drilling fluid, according to the present invention, whose main characteristic is to comprise:
- a predetermined volume of water, and
- between 0.5 and 2.0 kg of a mixture having the following composition:
   - between 20% and 80% by weight of an acid montmorillonite smectite clay, i.e. having a pH<7; and
   - between 80% and 20% by weight of a partially hydrolyzed polyacrylamide, or PHPA;
      for each m³ of water of the predetermined volume of water.

Further characteristics of the invention are described in the dependent claims.

In particular, the partially hydrolyzed polyacrylamide acts as a *"viscosifying agent*"*,* because it increases the viscosity of the aqueous solution in which it is dissolved.

In particular, the acid montmorillonite smectite clay can be a "bleaching earth" of the type used in the purification, and in the bleaching of oils.

Advantageously, the acid montmorillonite smectite clay can be a natural acid montmorillonite smectite clay, i.e. found in nature having a pH<7.

Alternatively, the acid montmorillonite smectite clay can be obtained by acidifying a montmorillonite smectite clay, which is not initially acid, i.e. which initially has a pH≥7. In this case, non-acid montmorillonite smectite clay, in particular a clay, which is non-acid in nature, is put into contact with a predetermined acid at a predetermined temperature, and for a predetermined time. More in particular, the acid that is used can be an acid selected from the group consisting of: hydrochloric acid (HCl), sulfuric acid (H₂SO₄), nitric acid (HNO₃), an organic acid, or a combination thereof.

For example the organic acid can be selected from the group consisting of: acetic acid, citric acid, oxalic acid, lactic acid, or a combination thereof.

As known, during acid activation, at the beginning, a substitution of cations in the structure of the mineral clay occurs by the hydrogen ions (H⁺) that are present in the acid according to one of the following reactions:

Me-smectite + H⁺ → H-smectite + Me⁺ (I)

Me-smectite + 2H⁺ → H-smectite + Me²⁺ (II)

respectively in the case of an alkali metal (Me⁺), or of an alkaline earth metals (Me⁺⁺). The contact between acid and smectite clay starts, therefore, a ionic substitution reaction, in particular at the edges of the lamellar structure of the clay, where the affinity of ions is higher, which leads, therefore, to the clay acidification. The acid activation, then, proceeds with an attack to the crystal structure of the mineral clay that leads to the leaching of iron, aluminium and magnesium ions, and to changes in the layers of smectite, in order to increase the specific surface area and the level of porosity of the same.

In particular, acid montmorillonite smectite clay can have a pH<6, advantageously a pH<5.

Preferably, acid montmorillonite smectite clay is acid bentonite.

The acid montmorillonite smectite clays, in particular the acid bentonites, has a high surface area. This can be obtained during the attack of the acid that is used for the above disclosed acidification step of the clay, or can be a physical property of the naturally acid montmorillonite smectite clay. In particular, owing to the high surface area, differently from the basic clays, the acid montmorillonite smectite clays do not completely dissolve in water, and do not form the three-dimensional structure that provides viscosity to the system. For these reasons, in the past, the acid montmorillonite clays have not been used for drilling fluids. The present invention, instead, overcomes a technical prejudice of the technical field, since the invention has demonstrated that mixing an acid montmorillonite smectite clay, in particular an acid bentonite, and a partially hydrolyzed polyacrylamide, in a predetermined ratio by weight, allows to obtain a mixture which surprisingly, at pressures at which the drilling muds operate, allows forming a coating panel at the walls of the borehole (cake), and that is, at the same time, economically advantageous w.r.t. the known drilling muds.

Advantageously, the ratio by weight between acid montmorillonite smectite clay and partially hydrolyzed polyacrylamide, in the mixture according to the invention, is the following:
- between 30% and 70% by weight of acid montmorillonite smectite clay;
- between 70% and 30% by weight of partially hydrolyzed polyacrylamide.

In an alternative embodiment, the ratio by weight of acid montmorillonite smectite clay, in particular acid bentonite, and partially hydrolyzed polyacrylamide, in the mixture according to the invention, is the following:
- between 40% and 60% by weight of acid montmorillonite smectite clay;
- between 60% and 40% by weight of partially hydrolyzed polyacrylamide.

In particular, the above disclosed partially hydrolyzed polyacrylamide, or PHPA, has the following structural formula:

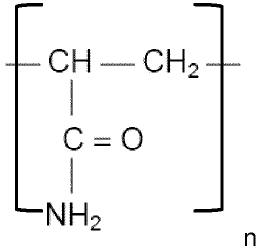

In an alternative embodiment, the above disclosed acid bentonite has the following percentage composition by weight:
- SiO₂: between 60% and 70%;
- Al₂O₃: between 10% and 15%;
- Fe₂O₃: between 5% and 15%;
- TiO₂: between 1% and 5%;
- CaO: between 1% and 5%;
- MgO: between 0.5% and 1%;
- Na₂O: between 0.01% and 1%;
- K₂O: between 0.01% and 1%.

Advantageously, the final drilling fluid has a concentration of use set between 0.5 and 2.0 kg of a mixture composed of the above indicated predetermined amount of acid bentonite and partially hydrolyzed polyacrylamide, or PHPA, for each m³ of water. At these concentrations, in fact, it has been demonstrated that the composition, or mixture, according to the present invention, shows the above mentioned properties, in particular the above disclosed property of forming a filter cake. Therefore, the present invention, if compared with the prior art solutions, is economically advantageous, because, differently from the prior art solutions, a small amount of product according to the invention is needed to obtain optimum results.

According to another aspect of the invention, a method for obtaining a drilling fluid provides the steps of:
- mixing between 20% and 80% by weight of an acid montmorillonite smectite clay, i.e. having a pH<7 with between 80% and 20% by weight of a partially hydrolyzed polyacrylamide, or PHPA;
- adding a predetermined amount by weight of the mixture of the acid montmorillonite smectite clay and PHPA to a predetermined volume of water, wherein said predetermined amount by weight of said mixture is between 0.5 kg and 2.0 kg for each m³ of water of the predetermined volume of water.

Preferably, the adding step provides to add between 0.5 kg and 1.5 kg of mixture of clay and PHPA for each m³ of water.

In particular, the drilling fluid can be obtained by mixing *in situ* the above disclosed predetermined amounts of acid montmorillonite smectite clay and partially hydrolyzed polyacrylamide (PHPA), and by dissolving the mixture so obtained in a predetermined amount of water, preferably between 0.5 and 2.0 kg of the above disclosed mixture for each m³ of water.

### Brief description of the drawings

The invention will now be shown with the following description of its exemplary embodiments, exemplifying but not limitative, with reference to the attached drawings in which:
- Fig. 1 diagrammatically shows the fluid loss trend versus the concentration of partially hydrolyzed polyacrylamide in the drilling fluid of prior art that is tested, maintaining constant the concentration di bentonite mud;
- Fig. 2 diagrammatically shows the Marsh-viscosity trend versus the concentration of partially hydrolyzed polyacrylamide in the drilling fluid of prior art that is tested, maintaining constant the concentration di bentonite mud;
- Fig. 3 diagrammatically shows fluid loss trend versus the concentration of bentonite mud in the drilling fluid of prior art that is tested, maintaining constant the concentration of partially hydrolyzed polyacrylamide;
- Fig. 4 diagrammatically shows Marsh-viscosity trend versus the concentration of bentonite mud in drilling fluid of prior art that is tested, maintaining constant the concentration of partially hydrolyzed polyacrylamide;
- Fig. 5 shows the flocculated material that is obtained by adding a bentonite mud to a polymeric fluid;
- Fig. 6 diagrammatically shows fluid loss trend versus the concentration of the mixture, according to the invention, in the drilling fluid that is tested;
- Fig. 7 diagrammatically shows the Marsh-viscosity trend versus the concentration of the mixture, according to the present invention, in the drilling fluid that is tested;
- Fig. 8 shows the filter cake that is formed testing the drilling fluid according to the present invention with a filter press test;
- Fig. 9 diagrammatically shows the fluid loss trend versus the concentration of the mixture, according to the present invention, the drilling fluid that is tested is obtained by using acid water (pH=4.8);
- Fig. 10 diagrammatically shows the Marsh-viscosity trend versus the concentration of the mixture, according to the present invention, the drilling fluid that is tested is obtained by using acid water (pH=4.8);
- Fig. 11 diagrammatically shows the fluid loss trend versus the concentration of the mixture, according to the present invention, the drilling fluid that is tested is obtained by using basic water (pH=8.4);
- Fig. 12 diagrammatically shows the Marsh-viscosity trend versus the concentration of the mixture, according to the present invention, the drilling fluid that is tested is obtained by using basic water (pH=8.4).

### EXPERIMENTAL DATA

In the followings the results obtained during filter press tests are carried out by using the analytical methodology according to API 13, in order to measure the filtrate, intended as the volume of fluid passed through the filter during the test, after 30 min at 7 atm. More in detail, the test has been stopped, however, in the following cases:
- before 30 min, in case of high values of fluid loss, that means when the value of 150 cc is reached;
- after 2 min from the beginning of the test, if fluid did not reduce the exit flow rate from filter press up to the drop level.

Thanks to this test, the presence of the panel as well as its thickness, and the value of filtrate obtained in the conditions above disclosed, have been determined.

### Preliminary remarks

A comparative analysis of some known drilling muds/fluids has been made in order to verify their capability of forming a filter cake, and therefore, of reducing filtrate up to a good value for the application; the values of filtrate are considered to be good below 30 mm, and to be acceptable below 35 ml.

### EXAMPLE 1

Drilling fluid prepared with partially hydrolyzed polyacrylamide, PHPA, in concentration of 0.5 and of 2.0 kg/m³. The results are indicated in the table 1 below.

**Tab.1**

| **PARTIALLY HYDROLYZED POLYACRYLAMIDE (PHPA)** | | |
|---|---|---|
| Concentration of use [kg\m³] | 0,5 | 2,0 |
| Marsh cone viscosity [s] | 50 | 120 |
| fluid loss value [ml] | n.d. | n.d. |
| cake thickness [mm] | n.d. | n.d. |

The test has been interrupted, and no fluid loss through the filter has been measured, because of the high rate at which the liquid exits the filter press. Therefore no filter cake formation has been observed and therefore it has not been possible to measure the thickness of the filter cake same.

The test has confirmed what was already known about partially hydrolyzed polyacrylamides, that is that these copolymers are not able to form a cake. The partially hydrolyzed polyacrylamides can, therefore, be used for preparing fluids only in particular conditions, and precisely when the drilling is carried out in cohesive soils and/or having a low permeability, where it is not necessary to preserve the walls to be passed through by the fluid, as for example when the holes have to be drilled in rock grounds, or clay soils.

Additionally, it seems appropriate to note that the values obtained by using other polymers in the same quantities of the above tests, like CMC, guar gums, or xanthan gums, are similar to those obtained with PHPA. A further limit of these polymers with respect to PHPA is the worst value of the Marsh cone viscosity with respect to the viscosity of the fluid prepared by using PHPA.

### EXAMPLE 2)

Drilling mud exclusively prepared with acid montmorillonite smectite clay having a pH=3, with a concentration of 50 kg/m³. The results are indicated in the table 2 below.

**Tab.2**

| **ACID MONTMORILLONITE SMECTITE CLAY con pH3** | |
|---|---|
| Concentration of use [kg\m³] | 50 |
| Marsh cone viscosity [s] | 28 |
| fluid loss value [ml] | n.d. |
| cake thickness[mm] | n.d. |

The test has been interrupted and it has not been possible to evaluate the fluid loss through the filter because of the high rate at which the fluid exits the filter press. Analogously it has not been possible to observe any filter cake formation, and, therefore, to measure its thickness.

Therefore, even though a large amount of acid montmorillonite smectite clays is used, neither a viscosifying capacity in water, nor the capacity to form a filter cake on the walls, has never been observed. So a settled clay is obtained on the bottom of the cup that, in a moderate manner, but not satisfactorily, slows down the exit flow rate of the filtrate.

For the above reasons these clays are not used as, and cannot be employed for preparing drilling muds.

### EXAMPLE 3)

Mixture composed of 95% of sodic montmorillonite smectite clay, and 5% of carboxymethyl cellulose, CMC. The drilling mud has been prepared with a concentration of 20 kg/m³ of the above mixture. The results are indicated in the table 3 below.

**Tab.3**

| **BENTONITE SODICA MIXTURETA CON 5% DI CMC*** | |
|---|---|
| Concentration of use [kq\m3] | 20 |
| Marsh cone viscosity [s] | 40 |
| fluid loss value [ml] | 28 |
| cake thickness [mm] | 0,8 |

The use of sodic bentonites mixed with CMC, i.e. mixtures bentonite-CMC for obtaining drilling muds, is well known in the art.

These mixtures, however, have commonly high concentrations of use, not less than 20-25 kg\m³ and, therefore, are very expensive. Other viscosifying polymers have a short chain like CMC, for example xanthan gums, or guar gums, since long-chain polymers, like for example PHPA, can cause damages to some yard equipments as for example screens and centrifuges.

### EXAMPLE 4)

Results of the invention: muds based on the mixture constituted of acid montmorillonite smectite clays used in combination with partially hydrolyzed polyacrylamide.

Some tests have been done on mixtures composed of different percentages of partially hydrolyzed polyacrylamide (PHPA) and of acid montmorillonite smectite clays with pH=3.

More precisely the following compositions:
**Example 4A)** 80% PHPA + 20% acid bentonite
**Example 4B)** 80% acid bentonite + 20% PHPA
**Example 4C)** 60% PHPA + 40% acid bentonite
**Example 4D)** 60% acid bentonite + 40% PHPA
**Example 4E)** 50% PHPA + 50% acid bentonite
   have been tested both in a concentration in water of 0.5 kg/m³ and of 1.5 kg/m³. The results are indicated in the table 4 below.

**Tab.4**

| **MIXTURE COMPOSITION** | **4A** | | **4B** | | **4C** | | **4D** | | **4E** | |
|---|---|---|---|---|---|---|---|---|---|---|
| Concentration of use [kg\m³] | 0.5 | 1.5 | 0.5 | 1.5 | 0.5 | 1.5 | 0.5 | 1.5 | 0.5 | 1.5 |
| Marsh cone viscosity [s] | 44 | 100 | 30 | 40 | 42 | 85 | 35 | 55 | 38 | 70 |
| fluid loss value [ml] | \ | 40 | 40 | 18 | 45 | 35 | 37 | 25 | 38 | 20 |
| cake thickness [mm] | 0.05 | 0.2 | 0.2 | 0.3 | 0.2 | 0.2 | 0.2 | 0.2 | 0.2 | 0.2 |

As indicated in the table 4 above, all the tested compositions are able to form a filter cake having the desired properties, and in particular, a filter cake with a thickness of about 0.2 mm for all the compositions except for composition 4B, for which a filter cake with a thickness of about 0.3 mm, because in this case, the percentage of acid clay mixed with water is much higher than the other tested compositions, and for composition 4A with a concentration of 0.5 kg/m³, for which the filter cake that is formed has a very small thickness, about 0.05 mm.

Among the compositions 4A-4E above indicated, that can all usable as drilling fluids, composition 4E) is the one with the best balance between "fluid loss" and viscosity whose values are, respectively: 20 ml and 70 s.

It is, furthermore, appropriate to note that since the results obtained by using concentration set between 0.5 kg/m³ and 1.5 kg/m³ was considered not to be necessary to test the above indicated compositions 4A-4E using higher concentrations, for example of 2 kg/m³, because the above disclosed properties can only be improved.

In order to prove the effectiveness of the present invention, analogous tests have been carried out on the following compositions:
- a mixture composed of 50% of sodic montmorillonite smectite clay, and 50% of PHPA (see example 5A);
- a mixture composed of 50% acid montmorillonite smectite clay, and 50% carboxymethyl cellulose (see example 5B).

### EXAMPLE 5A

Mixture composed of 50% sodic montmorillonite smectite clay, and 50% PHPA; the drilling mud is prepared with concentrations of 0.5, and of 1.5 kg/m³ of this mixture. The results are indicated in the table 5A below.

**Tab.5A**

| **50% ARGILLA SODICA + 50% PHPA** | | |
|---|---|---|
| Concentration of use [kg\m³] | 0,5 | 1.5 |
| Marsh cone viscosity [s] | 39 | 68 |
| fluid loss value [ml] | n.d. | 140 |
| cake thickness[mm] | n.d. | 0.2 |

The values obtained for this mixture, even if at a concentration of 1.5 kg\m³, are not sufficient to guarantee the stability of the borehole.

These sodic clays dissolve in water, impeding the filter cake, which is the only element that is able to reduce the filtrate value, to be formed.

### EXAMPLE 5B)

Mixture composed of 50% acid montmorillonite smectite clay having a pH=3, and 50% carboxymethyl cellulose; the drilling mud is prepared with concentrations of 0.5 and of 1.5 kg/m³ of this mixture. The results are indicated in the table 5B below.

**Tab.5B**

| **50% ACID CLAY + 50% CMC** | | |
|---|---|---|
| Concentration of use [kg\m³)] | 0.5 | 1.5 |
| Marsh cone viscosity [s] | 30 | 32 |
| fluid loss value [ml] | n.d. | n.d |
| cake thickness [mm)] | n.d. | n.d. |

The low viscosity obtained by using CMC as viscosifying agent, together with its short chain structure, does not allow forming a filter cake, if used in combination with a bleaching earth.

In particular, a comparative analysis has been carried out of some drilling muds of known type (samples A-F), obtained by mixing determined polymeric fluids with a certain bentonite mud, and the drilling fluid, according to the present invention.

More precisely, the samples A-F of prior art have been separately prepared by using a bentonite mud, which is obtained by introducing 50 kg of sodic bentonite in 1 m³ of water, and some polymeric fluids, which are obtained by dissolving in water different amounts of a partially hydrolyzed polyacrylamide.

The following samples has been then prepared:

### SAMPLE A

Sample A has the following composition:
- 90%: a polymeric fluid obtained by dissolving 0.75 kg of partially hydrolyzed polyacrylamide for each m³ of water;
- 10%: the above disclosed bentonite mud.

### SAMPLE B

Sample B has the following composition:
- 90%: a polymeric fluid obtained by dissolving 1.0 kg of partially hydrolyzed polyacrylamide for each m³ of water;
- 10%: the above disclosed bentonite mud.

### SAMPLE C

Sample C has the following composition:
- 90%: a polymeric fluid obtained by dissolving 1.5 kg of partially hydrolyzed polyacrylamide in each m³ of water;
- 10%: the above mentioned bentonite mud.

### SAMPLE D

Sample D has the following composition:
- 95% of a polymeric fluid obtained by dissolving 1.0 kg of partially hydrolyzed polyacrylamide for each m³ of water;
- 5% the above disclosed bentonite mud.

### SAMPLE E

Sample E has the same composition of sample B, therefore, sample E has the following composition:
- 90%: a polymeric fluid obtained by dissolving 1.0 kg of partially hydrolyzed polyacrylamide for each m³ of water;
- 10%: the above disclosed bentonite mud.

### SAMPLE F

Sample F has the following composition:
- 85%: a polymeric fluid obtained by dissolving 1.0 kg of partially hydrolyzed polyacrylamide for each m³ of water;
- 15% the above disclosed bentonite mud.

In other words, the concentration of partially hydrolyzed polyacrylamide in the sample increases going from sample A to sample C.

Instead, the amount of bentonite mud in the final fluid increases going from sample D to sample F.

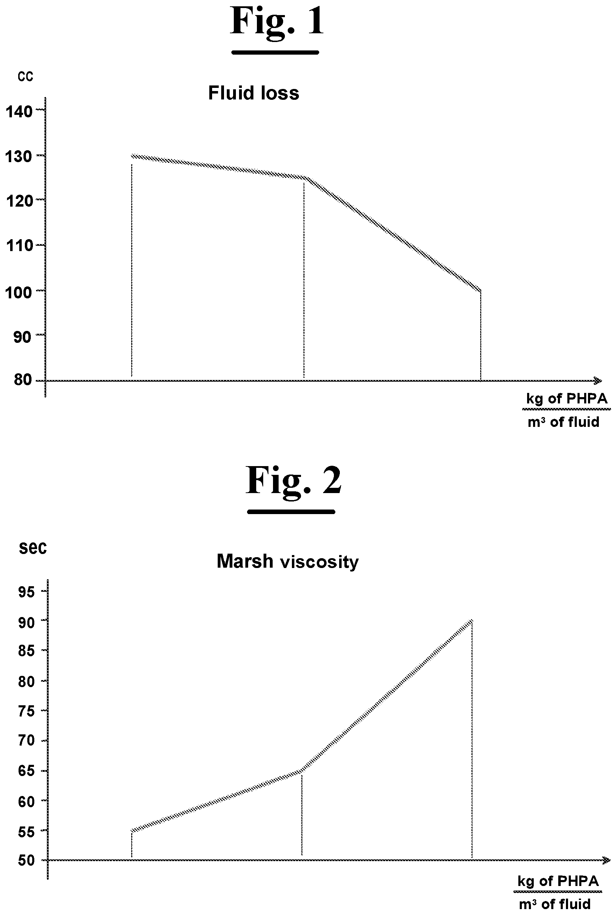

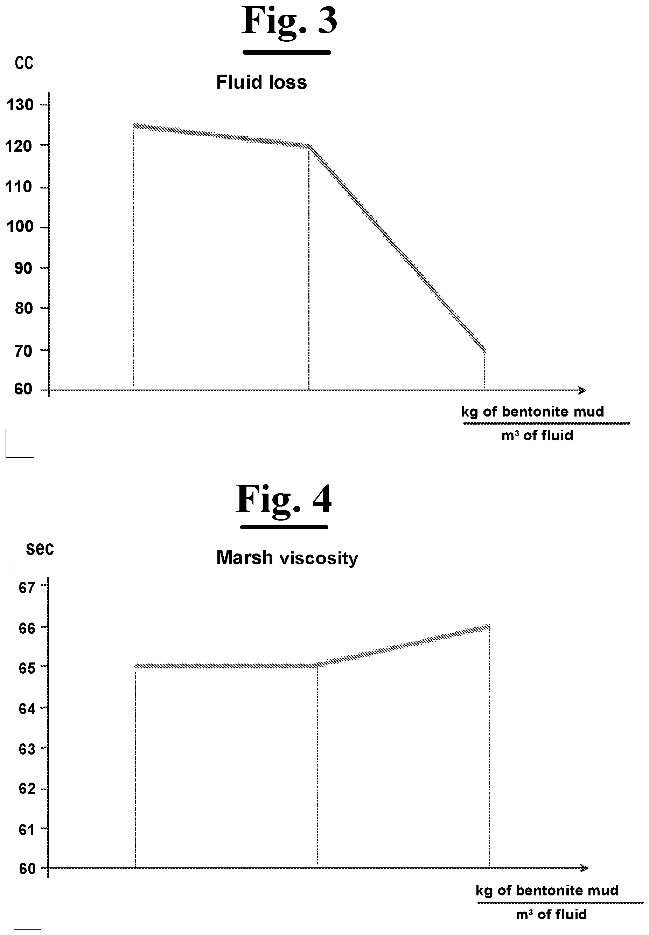

As shown in the graphs in figures 1 and 3, obtained by interpolating the values obtained from the above tests, the fluid loss tends to decrease both going from SAMPLE A to SAMPLE C (figure 1), and going from SAMPLE D to SAMPLE F (figure 3).

As regards the trend of Marsh-viscosity that is shown in the figures 2 and 4, as predictable, the increase of the amount of partially hydrolyzed polyacrylamide in the sample (from 0.75 to 1.5 kg/m³) results in a great increase of the viscosity (from 55 to 90 sec).

Instead, an increase in the concentration of bentonite mud of the final drilling fluid (from 5% to 15% by volume) does not reflect in a significant increase of Marsh-viscosity value (da 65 a 66 sec).

In light of the above, both an increase in the amount of partially hydrolyzed polyacrylamide in SAMPLE of polymeric fluid, and an increase in the amount of bentonite mud in the final SAMPLE, seems to positively affect the reduction of fluid loss.

However, it has been observed that the above trend is not due to a real barrier action (filter cake), but to a partial and temporarily obstruction of the flow exits, that are the leaks and cavities, which are naturally present in a borehole wall, as demonstrated by the other fluid loss that is shown in the figures. The obstruction phenomenon is due, in particular, to the fact that sodic bentonite after being dissolved in water, and added to a polymeric fluid, causes flocculation processes.

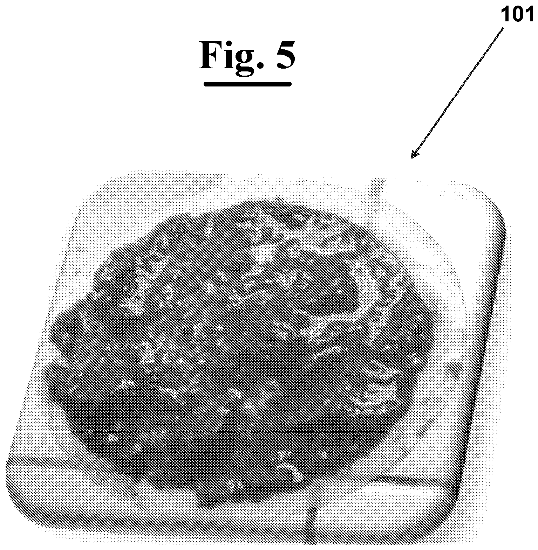

As it is clearly shown in figure 5, which illustrates the result that is obtained by submitting to a filter press test the drilling muds of prior art (samples A-F), a real filter cake is not formed on the filter, and instead a muddy ooze 101 containing flocculated bentonite is deposited on the filter.

Therefore it is concluded that the drilling fluids of known type that have been tested (samples A-F), are not able to form a coating panel, or a waterproof protective barrier, at the borehole walls.

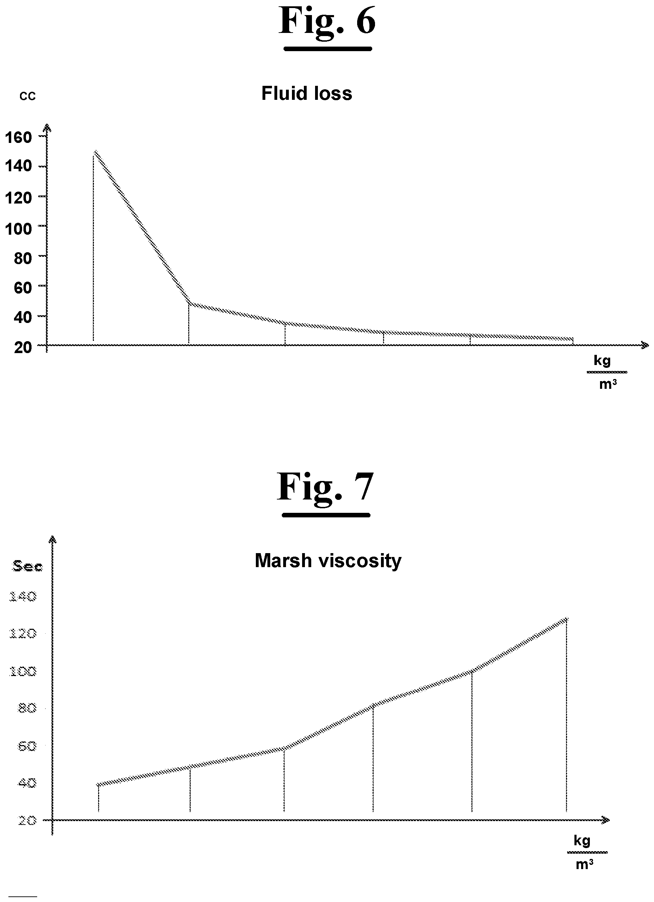

From the interpolation of the values obtained testing the above samples, the figures 6 and 7 have been obtained, illustrating the qualitative trends of fluid loss and Marsh-viscosity of the drilling fluid, according to the present invention, i.e. mixing determined amounts (50:50) of an acid bentonite and a partially hydrolyzed polyacrylamide (in the examined case: 2-Propenamide, homopolymer), versus the concentration.

More precisely, the fluid loss and Marsh-viscosity values have been measured for the following samples:

### SAMPLE I1

SAMPLE I1 has the following concentration: 0.3 kg/m³.

### SAMPLE I2

SAMPLE I2 has the following concentration: 0.5 kg/m³.

### SAMPLE I3

SAMPLE I3 has the following concentration: 0.7 kg/m³.

### SAMPLE I4

SAMPLE I4 has the following concentration: 1.0 kg/m³.

### SAMPLE I5

SAMPLE I5 has the following concentration: 1.5 kg/m³.

### SAMPLE I6

SAMPLE I6 has the following concentration: 2.0 kg/m³.

As shown in figure 6, except for sample I1, which shows a considerable loss of filtrate, all the samples I2-I6, according to the invention, i.e. with concentrations between 0.5 kg/m³ and 2 kg/m³ of the mixture of acid bentonite and partially hydrolyzed polyacrylamide, show a very low loss of filtrate, and precisely 48 cc for sample I2, 35 cc for sample I3, 29 for sample I4, 27 cc for sample I5, and 25 cc for sample I6.

Also the Marsh-viscosity value rapidly increases with the increase of the concentration that is used (figure 7).

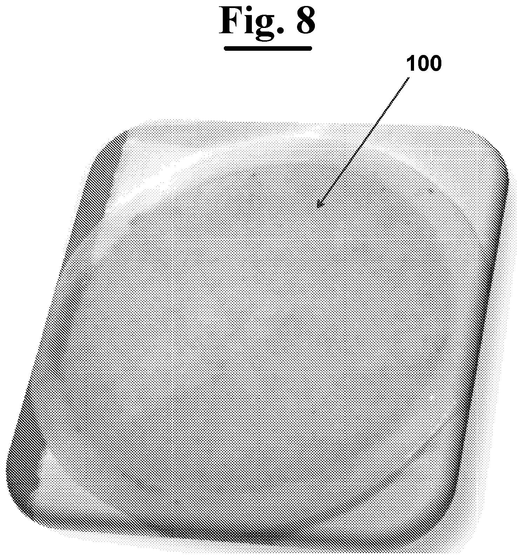

The experimental data above discussed demonstrate that the drilling fluid, according to the invention, differently from the drilling fluids of prior art (samples A-F) above mentioned, is able to form a protective barrier, i.e. a coating panel (the filter cake), having excellent waterproofing properties (figure 8). In fact, as known, the formation of a panel, having determined properties, is necessary in order to avoid that, during the carrying out of the borehole, high amounts of liquid fraction can filter through the borehole walls, i.e., in other words, in order to avoid to have high leakage of fluid.

In conclusion the drilling fluid that is obtained by using the mixture, according the present invention, is high performing, and in particular is able to form a substantially waterproof protective barrier (filter cake).

Samples have been also tested of drilling fluids obtained by dissolving the mixture, according to the invention, in water having different pH.

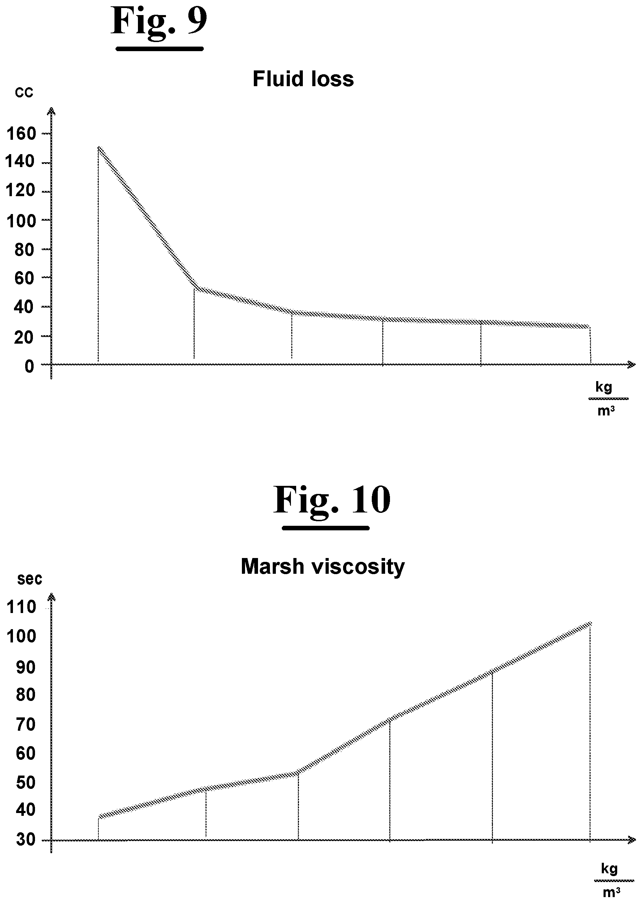

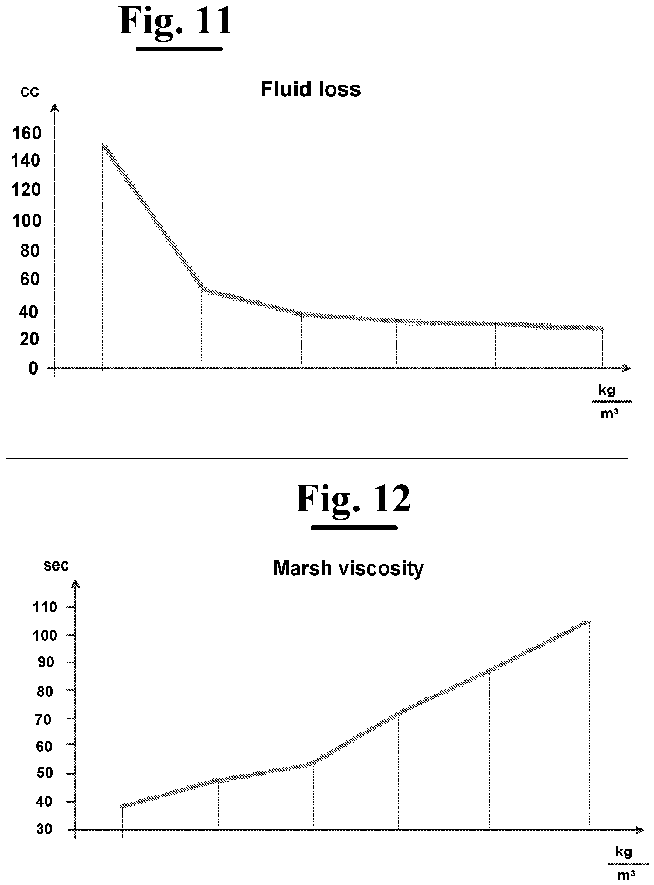

More precisely, the samples I1'-I6' and I1"-I6" have been tested that were obtained, respectively, by dissolving mixtures having the same concentrations of the mixtures I1-I6 above disclosed, but in acid water (pH 4,8) and in basic water (pH 8.4). The results of these tests are illustrated in figures 9 to 12, from which it is possible to derive that the drilling fluid obtained by dissolving the mixture according to the invention, both in acid water (see figures 9 and 10) and in basic water (see figures 11 and 12), does not show significantly loss of its properties above disclosed, in particular the capability to form the filter cake and, therefore, to stop the fluid loss.

Therefore, it is possible to advantageously obtain the drilling fluid, according to the invention, also by using the "dirty" water that can be found *in situ* (both acid and basic), without compromising the high performing properties of the drilling fluid according to the invention.

## Claims

1. A water-based drilling fluid **characterised in that** it comprises:
- a predetermined volume of water; and
- between 0.5 and 2.0 kg of a mixture having the following composition:
- between 20% and 80% by weight of an acid montmorillonite smectite clay, i.e. having a pH<7; and
- between 80% and 20% by weight of a partially hydrolyzed polyacrylamide, or PHPA;
for each m³ of said predetermined volume of water.

2. The water-based drilling fluid, according to claim 1 wherein said mixture has the following composition:
- between 30% and 70% by weight of said acid montmorillonite smectite clay;
- between 70% and 30% by weight of said partially hydrolyzed polyacrylamide, or PHPA.

3. The water-based drilling fluid, according to claim 1wherein said mixture has the following composition:
- between 40% and 60% by weight of said acid montmorillonite smectite clay; and
- between 60% and 40% of said partially hydrolyzed polyacrylamide, or PHPA.

4. The water-based drilling fluid, according to any previous claim, wherein said acid montmorillonite smectite clay has the following percentage composition by weight:
- SiO₂: between 60% and 70%;
- Al₂O₃: between 10% and 15%;
- Fe₂O₃: between 5% and 15%;
- TO₂: between 1 % and 5%;
- CaO: between 1% and 5%;
- MgO: between 0.5% and 1%;
- Na₂O: between 0.01% and 1%;
- K₂O: between 0.01% and 1%.

5. The water-based drilling fluid according to any previous claim wherein said acid montmorillonite smectite clay has a pH<6.

6. The water-based drilling fluid, according to any previous claim, wherein said acid montmorillonite smectite clay has a pH<5.

7. The water-based drilling fluid, according to any previous claim, wherein said acid montmorillonite smectite clay is a montmorillonite smectite clay acid in nature.

8. The water-based drilling fluid, according to any claim from 1 to 6, wherein said acid montmorillonite smectite clay is obtained by subjecting a montmorillonite smectite clay, which is not acid in nature, i.e. which initially has a pH≥7, to an acid treatment by using at least one acid.

9. The water-based drilling fluid, according to claim 8, wherein said acid is selected from the group consisting of: hydrochloric acid (HCI), sulfuric acid (H₂SO₄), nitric acid (HNO₃), an organic acid, or a combination thereof.

10. The water-based drilling fluid, according to claim 9, wherein said organic acid is selected from the group consisting of: acetic acid, citric acid, oxalic acid, lactic acid, or a combination thereof.

11. The water-based drilling fluid, according to any previous claim, wherein said acid montmorillonite smectite clay is acid bentonite.

12. Method for obtaining a water-based drilling fluid **characterised in that** it provides the steps of:
- mixing between 20% and 80% by weight of acid montmorillonite smectite clay, i.e. having a pH<7, and between 80% and 20% by weight of partially hydrolyzed polyacrylamide, thus obtaining a mixture of acid montmorillonite smectite clay and PHPA;
- adding a predetermined amount by weight of said mixture of acid montmorillonite smectite clay and PHPA to a predetermined volume of water, wherein said predetermined amount by weight of said mixture is between 0.5 kg and 2.0 kg for each m³ of water of said predetermined volume of water.

13. Method for obtaining a water-based drilling fluid, according to claim 12, wherein said acid montmorillonite smectite clay is a montmorillonite smectite clay acid in nature.

14. Method for obtaining a water-based drilling fluid, according to claim 12, wherein said acid montmorillonite smectite clay is obtained by subjecting a montmorillonite smectite clay, which is not acid in nature, i.e. which initially has a pH≥7, to an acid treatment using at least one acid.

15. Method for obtaining a water-based drilling fluid, according to claim 14, wherein said acid is selected from the group consisting of:
- hydrochloric acid (HCl),
- sulfuric acid (H2SO4),
- nitric acid (HNO3),
- an organic acid, or a combination thereof.

16. Method for obtaining a water-based drilling fluid, according to claim 15, wherein said organic acid is selected from the group consisting of: acetic acid, citric acid, oxalic acid, lactic acid, or a combination thereof.

## Patentansprüche

1. Wasserbasierte Bohrspülung, **dadurch gekennzeichnet, dass** sie umfasst:
- ein vorbestimmtes Volumen an Wasser; und
- zwischen 0.5 und 2.0 kg eines die nachfolgende Zusammensetzung aufweisenden Gemisches:
- zwischen 20 Gew.-% und 80 Gew.-% eines sauren Montmorillonit-Smektit-Tons, d.h. mit pH < 7; und
- zwischen 80 Gew.-% und 20 Gew.-% eines teilweise hydrolysierten Polyacrylamids, oder PHPAs;
pro m³ des vorbestimmten Volumens an Wasser.

2. Wasserbasierte Bohrspülung gemäß Anspruch 1, wobei das Gemisch die nachfolgende Zusammensetzung aufweist:
- zwischen 30 Gew.-% und 70 Gew.-% des sauren Montmorillonit-Smektit-Tons;
- zwischen 70 Gew.-% und 30 Gew.-% des teilweise hydrolysierten Polyacrylamids, oder PHPAs.

3. Wasserbasierte Bohrspülung gemäß Anspruch 1, wobei das Gemisch die nachfolgende Zusammensetzung aufweist:
- zwischen 40 Gew.-% und 60 Gew.-% des sauren Montmorillonit-Smektit-Tons; und
- zwischen 60% und 40% des teilweise hydrolysierten Polyacrylamids, oder PHPAs.

4. Wasserbasierte Bohrspülung gemäß einem der vorhergehenden Ansprüche, wobei der saure Montmorillonit-Smektit-Ton die nachfolgende gewichtsprozentuale Zusammensetzung aufweist:
- SiO₂: zwischen 60% und 70%;
- Al₂O₃: zwischen 10% und 15%;
- Fe₂O₃: zwischen 5% und 15%;
- TiO₂: zwischen 1% und 5%;
- CaO: zwischen 1% und 5%;
- MgO: zwischen 0.5 % und 1%;
- Na₂O: zwischen 0.01 % und 1%;
- K₂O: zwischen 0.01 % und 1%.

5. Wasserbasierte Bohrspülung gemäß einem der vorhergehenden Ansprüche, wobei der saure Montmorillonit-Smektit-Ton einen pH < 6 aufweist.

6. Wasserbasierte Bohrspülung gemäß einem der vorhergehenden Ansprüche, wobei der saure Montmorillonit-Smektit-Ton einen pH < 5 aufweist.

7. Wasserbasierte Bohrspülung gemäß einem der vorhergehenden Ansprüche, wobei es sich bei dem sauren Montmorillonit-Smektit-Ton um einen von Natur aus sauren Montmorillonit-Smektit-Ton handelt.

8. Wasserbasierte Bohrspülung gemäß einem der Ansprüche 1 bis 6, wobei der saure Montmorillonit-Smektit-Ton dadurch erhalten wird, dass ein Montmorillonit-Smektit-Ton, welcher nicht von Natur aus sauer ist, d.h. welcher anfänglich einen pH ≥ 7 aufweist, unter Verwendung von zumindest einer Säure einer Säurebehandlung unterzogen wird.

9. Wasserbasierte Bohrspülung gemäß Anspruch 8, wobei die Säure aus der Gruppe bestehend aus: Salzsäure (HCl), Schwefelsäure (H₂SO₄), Salpetersäure (HNO₃), einer organischen Säure, oder einer Kombination hiervon ausgewählt ist.

10. Wasserbasierte Bohrspülung gemäß Anspruch 9, wobei die organische Säure aus der Gruppe bestehend aus: Essigsäure, Zitronensäure, Oxalsäure, Milchsäure, oder einer Kombination hiervon ausgewählt ist.

11. Wasserbasierte Bohrspülung gemäß einem der vorhergehenden Ansprüche, wobei es sich bei dem sauren Montmorillonit-Smektit-Ton um sauren Bentonit handelt.

12. Verfahren zur Bereitstellung einer wasserbasierten Bohrspülung, **dadurch gekennzeichnet, dass** es die nachfolgenden Schritte vorsieht:
- Vermischen von zwischen 20 Gew.-% und 80 Gew.-% eines sauren Montmorillonit-Smektit-Tons, d.h. mit pH < 7, und zwischen 80 Gew.-% und 20 Gew.-% eines teilweise hydrolysierten Polyacrylamids, wodurch ein Gemisch aus saurem Montmorillonit-Smektit-Ton und PHPA erhalten wird;
- Zugeben einer vorbestimmten Gewichtsmenge des Gemisches aus saurem Montmorillonit-Smektit-Ton und PHPA zu einem vorbestimmten Volumen an Wasser, wobei die vorbestimmte Gewichtsmenge des Gemisches zwischen 0.5 kg und 2.0 kg pro m³ Wasser des vorbestimmten Volumens an Wasser beträgt.

13. Verfahren zur Bereitstellung einer wasserbasierten Bohrspülung gemäß Anspruch 12, wobei es sich bei dem sauren Montmorillonit-Smektit-Ton um einen von Natur aus sauren Montmorillonit-Smektit-Ton handelt.

14. Verfahren zur Bereitstellung einer wasserbasierten Bohrspülung gemäß Anspruch 12, wobei der saure Montmorillonit-Smektit-Ton dadurch erhalten wird, dass ein Montmorillonit-Smektit-Ton, welcher nicht von Natur aus sauer ist, d.h. welcher anfänglich einen pH ≥ 7 aufweist, unter Verwendung von zumindest einer Säure einer Säurebehandlung unterzogen wird.

15. Verfahren zur Bereitstellung einer wasserbasierten Bohrspülung gemäß Anspruch 14, wobei die Säure aus der Gruppe bestehend aus:
- Salzsäure (HCl),
- Schwefelsäure (H₂SO₄),
- Salpetersäure (HNO₃),
- einer organische Säure, oder einer Kombination hiervon ausgewählt wird.

16. Verfahren zur Bereitstellung einer wasserbasierten Bohrspülung gemäß Anspruch 15, wobei die organische Säure aus der Gruppe bestehend aus: Essigsäure, Zitronensäure, Oxalsäure, Milchsäure, oder einer Kombination hiervon ausgewählt wird.

## Revendications

1. Fluide de forage à base d'eau **caractérisé en ce qu'**il comprend :
- un volume d'eau prédéterminé ; et
- entre 0,5 et 2,0 kg d'un mélange ayant la composition suivante :
- entre 20 % et 80 % en poids d'une argile de smectite montmorillonite acide, à savoir ayant un pH < 7 ; et
- entre 80 % et 20 % en poids d'un polyacrylamide partiellement hydrolysé, ou PHPA ;
pour chaque m³ dudit volume d'eau prédéterminé.

2. Fluide de forage à base d'eau, selon la revendication 1 dans lequel ledit mélange a la composition suivante :
- entre 30 % et 70 % en poids de ladite argile de smectite montmorillonite acide ;
- entre 70 % et 30 % en poids dudit polyacrylamide partiellement hydrolysé, ou PHPA.

3. Fluide de forage à base d'eau, selon la revendication 1 dans lequel ledit mélange a la composition suivante :
- entre 40 % et 60 % en poids de ladite argile de smectite montmorillonite acide ; et
- entre 60 % et 40 % dudit polyacrylamide partiellement hydrolysé, ou PHPA.

4. Fluide de forage à base d'eau, selon l'une quelconque des revendications précédentes, dans lequel ladite argile de smectite montmorillonite acide a la composition suivante en pourcentage en poids :
- SiO₂: entre 60 % et 70 % ;
- Al₂O₃ : entre 10 % et 15 % ;
- Fe₂O₃ : entre 5 % et 15 % ;
- TiO₂ : entre 1% et 5 % ;
- CaO : entre 1% et 5 % ;
- MgO : entre 0,5 % et 1%;
- Na₂O: entre 0,01% et 1% ;
- K₂O : entre 0,01 % et 1 %.

5. Fluide de forage à base d'eau selon l'une quelconque des revendications précédentes dans lequel ladite argile de smectite montmorillonite acide a un pH < 6.

6. Fluide de forage à base d'eau, selon l'une quelconque des revendications précédentes, dans lequel ladite argile de smectite montmorillonite acide a un pH < 5.

7. Fluide de forage à base d'eau, selon l'une quelconque des revendications précédentes, dans lequel ladite argile de smectite montmorillonite acide est une argile de smectite montmorillonite de nature acide.

8. Fluide de forage à base d'eau, selon l'une quelconque des revendications 1 à 6, dans lequel ladite argile de smectite montmorillonite acide est obtenue en soumettant une argile de smectite montmorillonite, qui n'est pas de nature acide, à savoir qui a au départ un pH ≥ 7, à un traitement acide en utilisant au moins un acide.

9. Fluide de forage à base d'eau, selon la revendication 8, dans lequel ledit acide est choisi parmi le groupe constitué par : l'acide chlorhydrique (HCl), l'acide sulfurique (H₂SO₄), l'acide nitrique (HNO₃), un acide organique, ou une combinaison de ceux-ci.

10. Fluide de forage à base d'eau, selon la revendication 9, dans lequel ledit acide organique est choisi parmi le groupe constitué par : l'acide acétique, l'acide citrique, l'acide oxalique, l'acide lactique, ou une combinaison de ceux-ci.

11. Fluide de forage à base d'eau, selon l'une quelconque des revendications précédentes, dans lequel ladite argile de smectite montmorillonite acide est de la bentonite acide.

12. Procédé destiné à obtenir un fluide de forage à base d'eau **caractérisé en ce qu'**il fournit les étapes suivantes :
- le fait de mélanger entre 20 % et 80 % en poids d'argile de smectite montmorillonite acide, à savoir ayant un pH < 7, et entre 80 % et 20 % en poids de polyacrylamide partiellement hydrolysé, obtenant ainsi un mélange d'argile de smectite montmorillonite acide et de PHPA ;
- l'ajout d'une quantité prédéterminée en poids dudit mélange d'argile de smectite montmorillonite acide et de PHPA à un volume d'eau prédéterminé, dans lequel ladite quantité prédéterminée en poids dudit mélange est comprise entre 0,5 kg et 2,0 kg pour chaque m³ d'eau dudit volume d'eau prédéterminé.

13. Procédé destiné à obtenir un fluide de forage à base d'eau, selon la revendication 12, dans lequel ladite argile de smectite montmorillonite acide est une argile de smectite montmorillonite de nature acide.

14. Procédé destiné à obtenir un fluide de forage à base d'eau, selon la revendication 12, dans lequel ladite argile de smectite montmorillonite acide est obtenue en soumettant une argile de smectite montmorillonite, qui n'est pas de nature acide, à savoir qui a au départ un pH ≥ 7, à un traitement acide en utilisant au moins un acide.

15. Procédé destiné à obtenir un fluide de forage à base d'eau, selon la revendication 14, dans lequel ledit acide est choisi parmi le groupe constitué par :
- l'acide chlorhydrique (HCl),
- l'acide sulfurique (H2SO4),
- l'acide nitrique (HNO3),
- un acide organique, ou une combinaison de ceux-ci.

16. Procédé destiné à obtenir un fluide de forage à base d'eau, selon la revendication 15, dans lequel ledit acide organique est choisi parmi le groupe constitué par : l'acide acétique, l'acide citrique, l'acide oxalique, l'acide lactique, ou une combinaison de ceux-ci.
